**Europäisches Patentamt**

**European Patent Office**

**Office européen des brevets**

(19)

(11) Veröffentlichungsnummer: **0 091 149**
**B1**

(12) **EUROPÄISCHE PATENTSCHRIFT**

(45) Veröffentlichungstag der Patentschrift:
**03.07.85**

(51) Int. Cl.⁴: **G 11 B 17/02**

(21) Anmeldenummer: **83200394.1**

(22) Anmeldetag: **23.03.83**

(54) **Plattenspielgerät mit Zentrier- und Festklemmvorrichtung für eine starre Informationsträgerplatte.**

(30) Priorität: **27.03.82 DE 3211361**

(43) Veröffentlichungstag der Anmeldung:
**12.10.83 Patentblatt 83/41**

(45) Bekanntmachung des Hinweises auf die Patenterteilung:
**03.07.85 Patentblatt 85/27**

(84) Benannte Vertragsstaaten:
**DE FR GB IT**

(56) Entgegenhaltungen:
**DE - A - 2 709 261**
**FR - A - 2 428 296**
**GB - A - 2 017 381**
**GB - A - 2 034 955**
**US - A - 3 968 972**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL-5621 BA Eindhoven (NL)**
(84) Benannte Vertragsstaaten: **FR GB IT**

(72) Erfinder: **Eisemann, Kurt, Moltkestrasse 36,
D-1000 Berlin 45 (DE)**

(74) Vertreter: **Kupfermann, Fritz-Joachim et al, Philips
Patentverwaltung GmbH
Billstrasse 80 Postfach 10 51 49,
D-2000 Hamburg 28 (DE)**

## Beschreibung

Die Erfindung bezieht sich auf eine Vorrichtung an einem Plattenspielgerät für eine starre Informationsträgerplatte, die während der Informationsübertragung innerhalb des Gerätes auf einer Plattenhalterung umläuft, wobei die Plattenhalterung einen Auflageteller und eine Zentrierung aufweist, die aus einer Anzahl von an einem gemeinsamen Fussring in einem Kreis angeordneten Zentrierelementen besteht, die jedes für sich in radialer Richtung derart federnd ausgebildet sind, dass die Platte beim Umlaufen von den gegen ihr Mittenloch federnden Zentrierelementen zentriert gehalten ist, und wobei die Platte beim Schliessvorgang des Gerätedeckels mittels eines Plattenandrückers federnd auf die Zentrierung und gegen den Auflageteller gedrückt wird.

Eine solche Plattenfestklemmung ist bei einem Plattenspielgerät für eine Informationsträgerplatte aus der DE-OS 2921410 bekannt. Der Plattenandrücker ist mit einem Magnetring versehen, der federnd am Gerätedeckel angeordnet ist. Beim Schliessen des Gerätedeckels setzt sich dieser dauermagnetische Ring unter dem Andruck der Feder und seiner magnetischen Anziehungskraft zum Auflageteller auf die Platte auf. Während des ganzen Spielvorganges ruht der Magnetring des Plattenandrückers auf der Platte und hält diese dabei fest.

Bei Plattenspielern, auf denen Informationsträgerplatten mit digitalen Informationen abgespielt werden, ist es wichtig, dass die Informationsträgerplatte genau zentriert auf der Plattenauflage festgelegt wird. Die bekannten Halterungen lassen sich nicht so exakt aus Kunststoff spritzen, dass die Federkräfte aller radial gegeneinander liegenden und wirkenden Federelemente gleich sind.

Es ist Aufgabe der Erfindung, eine Vorrichtung an einem Plattenspielgerät für eine starre Informationsträgerplatte zu schaffen, mit der die Informationsträgerplatte zwar sicher und satt auf dem Auflageteller aufliegt, bei der die Platte aber auch optimal konzentrisch gehalten wird.

Die gestellte Aufgabe ist erfindungsgemäss dadurch gelöst, dass

– die Zentrierelemente aus U-förmigen Bügeln bestehen, die rund um den Fussring in Radialebenen angeordnet sind, deren innere Schenkel am Fussring festgelegt sind und deren äussere Schenkel radial frei beweglich in eine ringnutförmige Vertiefung des Auflagetellers eingreifen, in der sich auch der Fussring befindet,

– der Fussring mit einem nach innen vorstehenden Kragen versehen ist, der die Aussenwand einer Bundhülse mit Spiel verschieblich umgibt, die durch den Fussring von dem Auflageteller her zentrisch hindurchgreift, wobei der Fussring mittels einer auf die Bundhülse aufgepassten Sicherungshülse durch Einklemmen des Kragens zwischen Sicherungshülse und dem Auflageteller festgelegt ist,

– alle äusseren Schenkel ohne aufgelegte Informationsträgerplatte gegen einen genau zentrischen Anschlagring des Auflagetellers mit gleicher Federkraft nach aussen federn,

– die Innenwand des Loches in der Informationsträgerplatte einen kleineren Durchmesser hat als der Anschlagring.

Auf diese Weise ergibt sich ein genau zentral nach aussen gerichteter Andruck an der Informationsträgerplatte und eine genau zentrische Auflage am Auflageteller.

Die Erfindung wird anhand des in der Zeichnung dargestellten Ausführungsbeispiels näher erläutert. Es zeigen:

Fig. 1 einen Schnitt durch ein Laufwerk eines Plattenspielers für eine starre Informationsträgerplatte mit einem Auflageteller und einem Plattenandrücker und einer Zentrierung bei angehobenem Deckel,

Fig. 2 das Laufwerk nach dem Auflegen und Andrücken der Informationsträgerplatte gegen den Auflageteller, wobei sich der Deckel wieder ein wenig von der Informationsträgerplatte abgehoben hat.

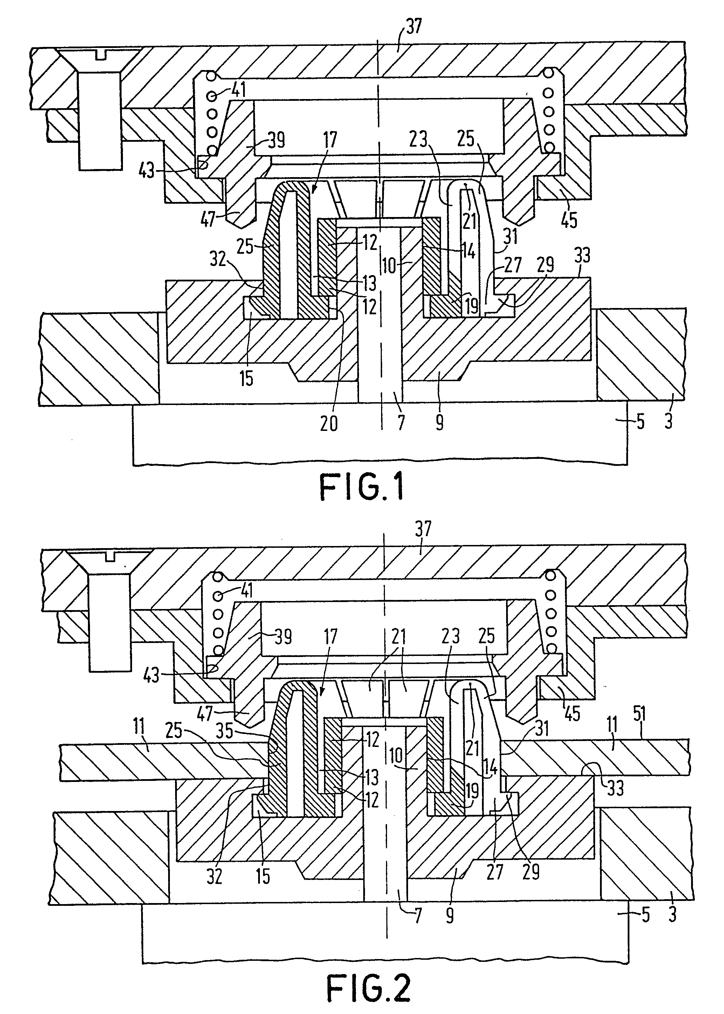

Das Chassis eines in Fig. 1 dargestellten Plattenspielerlaufwerkes 3 trägt einen Antriebsmotor 5. Auf die aus dem Motor 5 herausgeführte Antriebswelle 7 ist ein Auflageteller 9 für eine starre Informationsträgerplatte 11 aufgeflanscht. Im Zentrum des Auflagetellers 9 befindet sich eine Bundhülse, auf deren Aussenwand 14 eine Sicherungshülse 12 aufpressbar ist. Rings um die Bundhülse 10 erstreckt sich eine ringnutförmige Vertiefung 13, die mit einer nach aussen geführten nutförmigen Hinterschneidung 15 radial nach aussen in den Auflageteller 9 eingreift.

Eine in den Auflageteller 9 einsetzbare Zentrierung 17 besteht aus einem Fussring 19 mit einem nach innen vorstehenden Kragen 20. Rund um den Fussring 19 sind in Radialebenen, in die die Achse der Zentrierung fällt, U-förmige Kunststoffbügel 21 angeordnet. Die inneren Schenkel 23 der Bügel 21 sind am Fussring 19 festgelegt, und die äusseren Schenkel 25 sind radial nach aussen federnd beweglich. Die freien Enden 27 der äusseren Schenkel 25 greifen mit Ansätzen 29 in die Hinterschneidung 15 des Auflagetellers 9 ein. Auf einen nach innen geführten Kragen 20 des Fussringes 19, der die Bundhülse 10 mit Spiel umgibt, ist die Sicherungshülse 12 aufpressbar.

Es ist wichtig, dass die Zentrierung 17 eine aufgelegte Informationsträgerplatte 11 genau zentrisch festlegt. Ein genaues Zentrieren setzt aber voraus, dass alle Bügel 21 der Zentrierung 17 dieselbe Elastizität aufweisen. Dies ist aber praktisch nicht der Fall. Spritztoleranzen führen zu unterschiedlichen Elastizitäten. Es gilt, diesen Mangel zu beheben, ohne dass ein exakteres Spritzen notwendig wäre. Hierzu ist vorgesehen, dass die Zentrierung bei zunächst entfernter Sicherungshülse 12 auf den Auflageteller 9 aufgesetzt wird. Die Ansätze 29 des Fussringes 19 greifen dabei in die Hinterschneidung 15. Die Aussenwände 31 der äusseren Schenkel 25 drücken federnd an einen genau zentrischen Anschlagring 32 der Vertiefung 13. Der Fussring 19, der noch frei verschiebbar ist, schiebt sich bei sich ausgleichenden Federkräften der einzelnen Bügel 21 von selbst in eine Mittelstellung, die nicht genau zentrisch sein muss zur Antriebswelle, die aber dem federausgeglichenen Zentrum der Zentrierung entspricht. Nach dieser von selbst erfolgten Einstellung der Mittelstellung des Fussringes 19 wird auf die Bundhülse 10 die Sicherungshülse 12 gepresst, die den Fussring 19 nun festklemmt. Die Zentrierung 17 ist damit in ihrem federausgeglichenen Zentrum festgelegt und einsatzbereit.

In dem Deckel 37 des Laufwerkes ist axial verschieblich ein Plattenandrücker 39 gelagert. Eine Schraubenfeder 41 drückt auf einen Kragen 43 des Plattenandrückers 39, der damit bis zu einem Anschlag 45 in Richtung auf die Auflageteller 9 gedrückt wird. Der Plattenandrücker 39 ist mit einem in Richtung auf den Auflageteller 9 hervorstehenden Ring 47 versehen.

Zum Abspielen einer Informationsträgerplatte 11 wird diese auf den Auflageteller 9 bzw. mit ihrem Loch auf die Zentrierung gelegt. Wird nun der Deckel 37 im Rahmen der ersten Stufe eines Schliessvorganges niedergedrückt, dann drückt der Plattenandrücker 39 die Informationsträgerplatte 11 fest auf die Zentrierung 17 mit ihren U-förmigen Bügeln 21 und den Auflageteller 9. Die Innenwand 35 des Loches, die im Durchmesser kleiner ist als der Anschlagring 32 des Auflagetellers 9, drückt die äusseren Schenkel 25 der einzelnen U-förmigen Bügel 21 entgegen der Vorspannung der U-förmigen Bügel nach innen (Fig. 2). Dabei kommt längs der Innenwand des Loches der Informationsträgerplatte 11 und der Aussenwände 31 der Schenkel 25 ein Kontaktdruck zustande, der ausreicht, die Informationsträgerplatte fest am Auflageteller 9 festzuhalten. Die federausgeglichenen U-förmigen Bügel 21 haben die Informationsträgerplatte gleichzeitig in die zum Abspielen richtige zentrische Stellung gebracht.

In einer zweiten Bewegungsstufe des Schliessvorganges hebt sich der Deckel 37 wieder ein wenig an. Der Ring 47 hat sich dann von der oberfläche 51 der Informationsträgerplatte 11 gelöst, und die Informationsträgerplatte 11 ist während des nun beginnenden Spielvorganges nur mit der Zentrierung 17 und dem Auflageteller verbunden. Diese Ausführungsform hat eine permanente Zentrier- und Festhaltekraft.

## Patentanspruch

Vorrichtung an einem Plattenspielgerät für eine starre Informationsträgerplatte, die während der Informationsübertragung innerhalb des Gerätes auf einer Plattenhalterung umläuft, wobei die Plattenhalterung einen Auflageteller (9) und eine Zentrierung aufweist, die aus einer Anzahl von an einem gemeinsamen Fussring (19) in einem Kreis angeordneten Zentrierelementen (21) besteht, die jedes für sich in radialer Richtung derart federnd ausgebildet sind, dass die Platte beim Umlaufen von den gegen ihr Mittenloch federnden Zentrierelementen zentriert gehalten ist, und wobei die Platte beim Schliessvorgang des Gerätedeckels mittels eines Plattenandrückers federnd auf die Zentrierung und gegen den Auflageteller gedrückt wird, dadurch gekennzeichnet, dass

— die Zentrierelemente aus U-förmigen Bügeln (21) bestehen, die rund um den Fussring (19) in Radialebenen angeordnet sind, deren innere Schenkel (23) am Fussring (19) festgelegt sind und deren äussere Schenkel radial frei beweglich in eine ringnutförmige Vertiefung (13) des Auflagetellers (9) eingreifen, in der sich auch der Fussring (19) befindet,

— der Fussring (19) mit einem nach innen vorstehenden Kragen (20) versehen ist, der die Aussenwand (14) einer Bundhülse (10) mit Spiel verschieblich umgibt, die durch den Fussring (19) von dem Auflageteller (9) her zentrisch hindurchgreift, wobei der Fussring (19) mittels einer auf die Bundhülse (10) aufgepassten Sicherungshülse (12) durch Einklemmen des Kragens (20) zwischen Sicherungshülse (12) und dem Auflageteller (9) festgelegt ist,

— alle äusseren Schenkel (25) ohne aufgelegte Informationsträgerplatte gegen einen genau zentrischen Anschlagring (32) des Auflagetellers (9) mit gleicher Federkraft nach aussen federn,

— die Innenwand (35) des Loches in der Informationsträgerplatte (11) einen kleineren Durchmesser hat als der Anschlagring (32).

## Claim

A device on a disc player for a rigid information-carrying disc which during the information transfer rotates inside the apparatus on a disc holder, the disc holder comprising a turntable (9) and a centring device which comprises a plurality of centring elements (21) which are arranged along a circle, which are connected to a common base ring (19) and which can each deflect elastically in a radial direction so that the centring elements, which act on the wall of the centre hole of the disc, keep the disc in a centred positin relative to the axis of rotation during its rotation, the player further comprising a lid which as it is closed urges the disc resiliently onto the centring device and against the turntable by means of a disc loader, characterized in that

— the centring elements comprise U-shaped members (21) which extend in radial planes around the base ring (19), their inner limbs (23) being connected to the base ring (19) and their outer limbs engaging an annular recess (13) in the turntable (9) so that the limbs are freely radially movable in said recess in which the base ring (19) is also situated,

— the base ring (19) is provided with an inwardly projecting collar (20) which surrounds a flanged sleeve (10) with clearance, which flanged sleeve extends from the turntable (9) through the base ring (19) at the centre thereof, the base ring (19) being fixed by a clamping sleeve (12) which is slid onto the flanged sleeve (10), so that the collar (20) is clamped between the clamping sleeve (12) and the turntable (9),

— in the absence of an information-carrying disc, all the outer limbs (25) spring outwards with the same force against an accurately centred stop ring (32) on the turntable (9), and

— the wall (25) of the centre hole in the information-carrying disc (11) has a diameter which is smaller than that of the stop ring (32).

## Revendication

Dispositif prévu dans un tourne-disque destiné à un disque de support d'information rigide qui, pendant le transfert d'information, tourne à l'intérieur de l'appareil sur un dispositif de maintien de disque, ce dispositif comportant un plateau de support (9) et un dispositif de centrage qui est formé d'un certain nombre d'éléments de centrage (21) disposés en cercle sur un anneau de base commun (19) et présentant chacun dans le sens radial une élasticité telle que le disque, lorsqu'il tourne, soit maintenu centré par les éléments de centrage qui sont sollicités élastiquement contre son trou central, le disque étant pressé, lors de l'opération de fermeture du couvercle de l'appareil, élastiquement au moyen d'un presseur de disque sur le dispositif de centrage et contre le plateau de support, caractérisé en ce que

— les éléments de centrage sont formés d'étriers (21) en U qui sont disposés en rond autour de l'anneau de base (19) dans des plans radiaux, les branches internes (23) des étriers étant fixées à l'anneau de base (19) et leurs branches externes s'engageant d'une manière librement mobile dans le sens radial dans un creux en forme de gorge annulaire (13) du plateau de support (9) dans lequel se trouve également l'anneau de base (19),

— l'anneau de base (19) est pourvu d'une collerette (20) faisant saillie vers l'intérieur qui encercle de façon mobile avec un certain jeu la paroi externe (14) d'une tubulure (10) qui traverse l'anneau de base (19) d'une manière centrée à partir du plateau de support (9), l'anneau de base (19) étant fixé au moyen d'une douille d'arrêt (12) adaptée sur la tubulure (10) par serrage de la collerette (20) entre la douille d'arrêt (12) et le plateau de support (9),

— toutes les branches externes (25), lorsque aucun disque de support d'information n'est posé, étant sollicitées vers l'extérieur avec la même force élastique contre un anneau de butée (32) centré avec précision du plateau de support (9),

— la paroi interne (35) du trou prévu dans le disque de support d'information (11) a un diamètre plus petit que celui de l'anneau de butée (32).

FIG.1

FIG.2